# EUROPEAN PATENT APPLICATION

(11) **EP 2 390 717 A1**
(43) Date of publication of application: **30.11.2011**
(21) Application number: 11167584.9
(22) Date of filing: 26.05.2011
(51) Int. Cl.: G02F 1/13363, G02F 1/1335, B60K 35/00, G02B 5/30

(54) **Optical control element**

(30) Priority: 27.05.2010 JP 2010121517
(71) Applicant: Hayashi Engineering Inc., Nagoya-shi, Aichi 460-0013 (JP)
(72) Inventor: FURUSOU, Nobuyoshi, Nagoya-shi, Aichi 460-0013 (JP)
(74) Representative: Winter, Brandl, Fürniss, Hübner, Röss, Kaiser, Polte - Partnerschaft

(57) **Abstract**

An optical control element according to the invention includes a first polarizer a that is provided on a display screen side of a display apparatus and has a polarization absorption axis 1 set in a horizontal direction, a second polarizer a' that is provided on a viewer side and has a polarization absorption axis 1' set in the horizontal direction or a direction that forms a predetermined angle with the horizontal direction, and at least one retardation film b disposed between the first polarizer a and the second polarizer a'.

## Description

### BACKGROUND OF THE INVENTION

### 1. Field of the Invention

The invention relates to an optical control element that is provided in a display apparatus installed in a vehicle or the like in order to suppress reflection on a windshield of light emitted from a display screen in a specific direction.

### 2. Description of Related Art

Flat panel displays (abbreviated to FPD hereafter) such as liquid crystal displays, EL displays, and plasma displays are currently undergoing rapid development as information display apparatuses, taking advantage of favorable characteristics inherent therein such as reduced thickness, weight, and power consumption.

As regards a viewing angle characteristic of a display apparatus, various characteristics may be required, depending on conditions of use. For example, when a display is to be viewed by a large number of people, a wide viewing angle is required, whereas a narrow viewing angle that prevents viewing from a specific direction is required to protect privacy.

Thanks to recent technological advancements, FPDs have come to be used widely as in-vehicle display apparatuses such as an instrument panel in front of a driving seat, a car navigation system, and so on. However, when an FPD is installed in a vehicle, display content is reflected on a windshield such that the visibility of a driver is reduced, and this is highly problematic in terms of driving safety.

To solve this problem, a light control film (abbreviated to LCF hereafter) that controls light emitted from a display screen has been put to practical use. An LCF is formed with a fine toothed comb-shaped louvered structure, and is capable of controlling the transmission of light emitted in a specific direction.

As disclosed in Japanese Patent Publication No. 47-43845 and Published Japanese Translation of PCT Application No. 2004-514167 (JP-A-2004-514167), however, a manufacturing process for manufacturing an LCF is complicated.

Further, the manufactured LCF has a louvered structure in which a transparent region and a light absorption region are formed as stripes, and characteristics of the LCF are controlled in accordance with a height and an angle of the louvers and a distribution of the transparent region and the light absorbing region. Therefore, even light emitted in a frontal direction is partially absorbed, leading to a reduction in transmittance.

Furthermore, when an LCF is disposed on a front surface of a display apparatus, moiré (interference bands between dark and light) is caused by interference with a pixel array pattern, leading to a reduction in display quality.

Moreover, when the viewing angle is narrowed using an LCF, dramatic characteristic variation occurs, and therefore, depending on disposal conditions of the display apparatus and a positional relationship between the apparatus and a viewer, the display screen may darken, leading to a reduction in brightness.

Another viewing angle control technique is proposed in Japanese Patent Application Publication No. 01-302383 (JP-A-01-302383). In this method, a transmission axis direction of a polarizer provided on a display screen front surface of a liquid crystal display apparatus is adjusted such that a reflected image reflected on a windshield has maximum darkness. With this method, however, the ability of the liquid crystal display apparatus to prevent reflection on the windshield varies dramatically depending on the viewing position such that when a head position (an eye position) of the driver deviates from a predetermined position, the display screen is reflected. Hence, this method is impractical.

Japanese Patent Application Publication No. 2009-104008 (JP-A-2009-104008) and Japanese Patent Application No. 2009-51121 (JP-A-2009-51121) disclose a viewing angle control method employing a plurality of retardation films in order to suppress reflection of a liquid crystal panel on a windshield. However, JP-A-2009-104008 and JP-A-2009-51121 are limited to a TN system (a liquid crystal panel driving system) in which polarizers sandwiching a liquid crystal cell are set at 45° from a horizontal direction and disposed to be mutually orthogonal, and make no mention of a VA system or an IPS system in which the polarizers sandwiching the liquid crystal cell are set in the horizontal direction or a vertical direction.

### SUMMARY OF THE INVENTION

The invention provides an optical control element in which a polarizer having a horizontal polarization absorption axis is provided on a display screen side of a display apparatus such that reflection on a windshield of light emitted in a specific direction can be suppressed and a viewing region can be secured on the display screen easily without using a louvered structure.

An optical control element according to a first aspect of the invention includes: a first polarizer that is provided on a display screen side of a display apparatus and has a polarization absorption axis set in a horizontal direction; a second polarizer that is provided on a viewer side of the display apparatus and has a polarization absorption axis set in the horizontal direction or a direction that forms a predetermined angle with the horizontal direction; and at least one retardation film disposed between the first polarizer and the second polarizer.

An optical control element according to a second aspect of the invention includes: a first polarizer that is provided on a display screen side of a display apparatus including a touch panel and has a polarization absorption axis set in a horizontal direction; a second polarizer that is provided on a viewer side of the display apparatus and has a polarization absorption axis set in the horizontal direction or at a direction that forms a predetermined angle with the horizontal direction; and a transparent touch panel electrode substrate and at least one retardation film disposed between the first polarizer and the second polarizer.

According to these constitutions, in a display apparatus in which a display screen side polarizer is set in a horizontal direction or a vertical direction, or in other words a display apparatus employing a VA system or an IPS system, light emitted from the display screen in a specific direction can be blocked without using an optical element having a louvered structure, and therefore reflection of the light emitted in a specific direction on a windshield can be suppressed in an in-vehicle display apparatus.

In this optical control element, the retardation film may be an inclined retardation film in which a retardation angle dependency (a retardation value) is asymmetrical to a normal direction of a film plane when a film in-plane fast axis or slow axis thereof is set as an incline axis, or a laminated retardation film formed by laminating together two or more retardation films.
Further, the laminated retardation film may be formed by laminating together the inclined retardation film and a non-inclined retardation film in which the retardation angle dependency (the retardation value) is symmetrical to the normal direction of the film plane when the film in-plane fast axis or slow axis thereof is set as the incline axis, and the phase advance axes or phase delay axes of the inclined retardation film and the non-inclined retardation film may be parallel or orthogonal. Moreover, the non-inclined retardation film of the laminated retardation film may be biaxial

Furthermore, in an in-vehicle display apparatus, a polarized light emitted from the second polarizer disposed on the viewer side may form a P polarization component relative to a reflective windshield. P polarization has a reflectance of 0 at a predetermined entrance angle, and therefore reflection on the windshield can be suppressed.

An angle θ11' or θ1" formed by respective absorption axes or transmission axes of the first polarizer on the display screen side and the second polarizer on the viewer side is preferably set within a range of -50° ≤ θ11' ≤ 50° or -50° ≤ θ1" ≤ 50°, In so doing, light emitted onto the windshield from the display screen can be blocked without causing a reduction in visibility such as a brightness reduction or a color change in the normal direction of the display screen.

According to the aspects described above, in a display apparatus in which a display screen side polarizer is set in a horizontal direction or a vertical direction, light emitted from the display screen in a specific direction can be blocked without using an optical element having a louvered structure, and therefore reflection on a windshield of light emitted in a specific direction can be suppressed in an in-vehicle display apparatus.

### BRIEF DESCRIPTION OF THE DRAWINGS

The features, advantages, and technical and industrial significance of the invention will be described in the following detailed description of example embodiments of the invention with reference to the accompanying drawings, in which like numerals denote like elements, and wherein:
FIG. 1 is a schematic view showing a first constitutional example of an optical control element according to the invention;
FIG. 2 is a schematic view showing a second constitutional example of an optical control element according to the invention;
FIG. 3 is a view illustrating a film configuration for simulating a transmitted light polarization condition according to the first constitutional example of the invention;
FIG. 4 is a view illustrating a film configuration for simulating a transmitted light polarization condition according to the second constitutional example of the invention;
FIG. 5 is a view illustrating a light blocking direction during a simulation of the transmitted light polarization condition;
FIGS. 6iA to 6iC are views showing calculation results obtained from simulations of the transmitted light polarization condition according to the first constitutional example and a second constitutional example 2A;

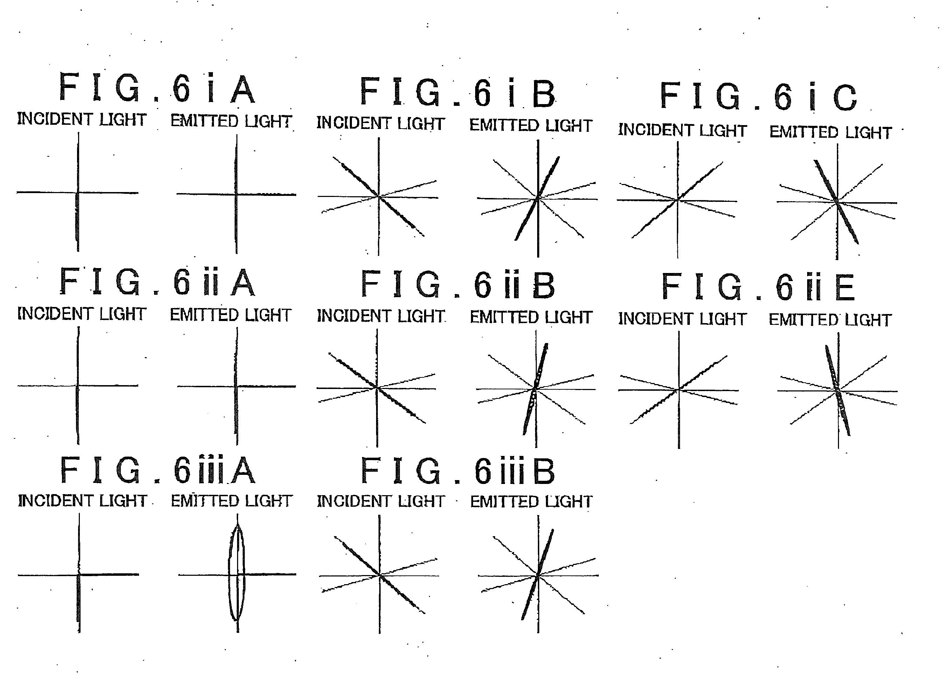

FIGS. 6iiA, 6iiB and 6iiE are views showing calculation results obtained from a simulation of the transmitted light polarization condition according to a second constitutional example 2B;
FIGS. 6iiiA and 6iiiB are views showing calculation results obtained from a simulation of the transmitted light polarization condition according to a second constitutional example 2C;

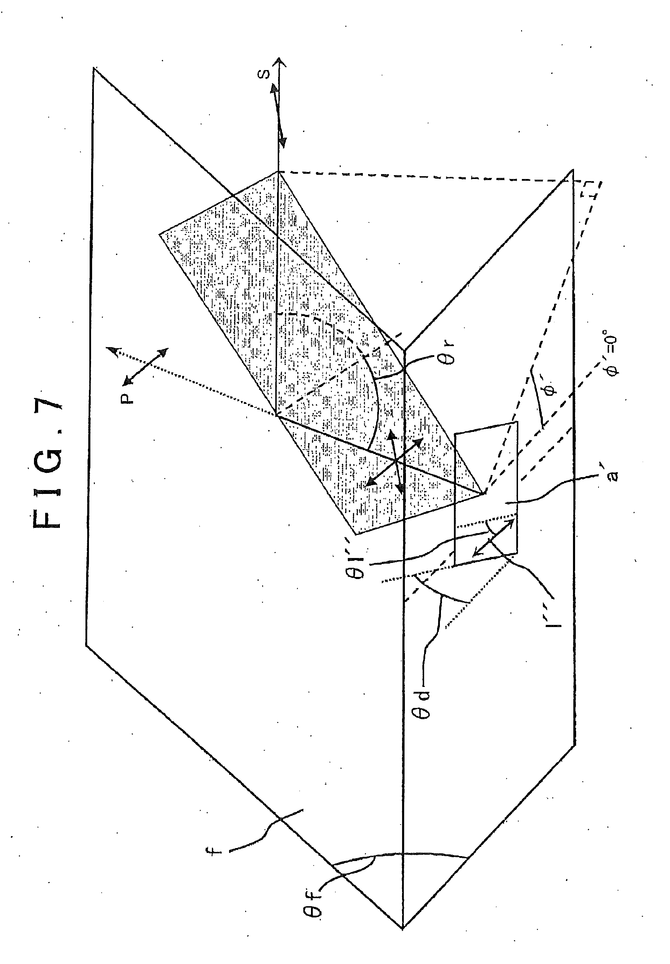

FIG. 7 is a schematic view illustrating reflection when an optical control element according to another constitutional example of the invention is installed in a vehicle;

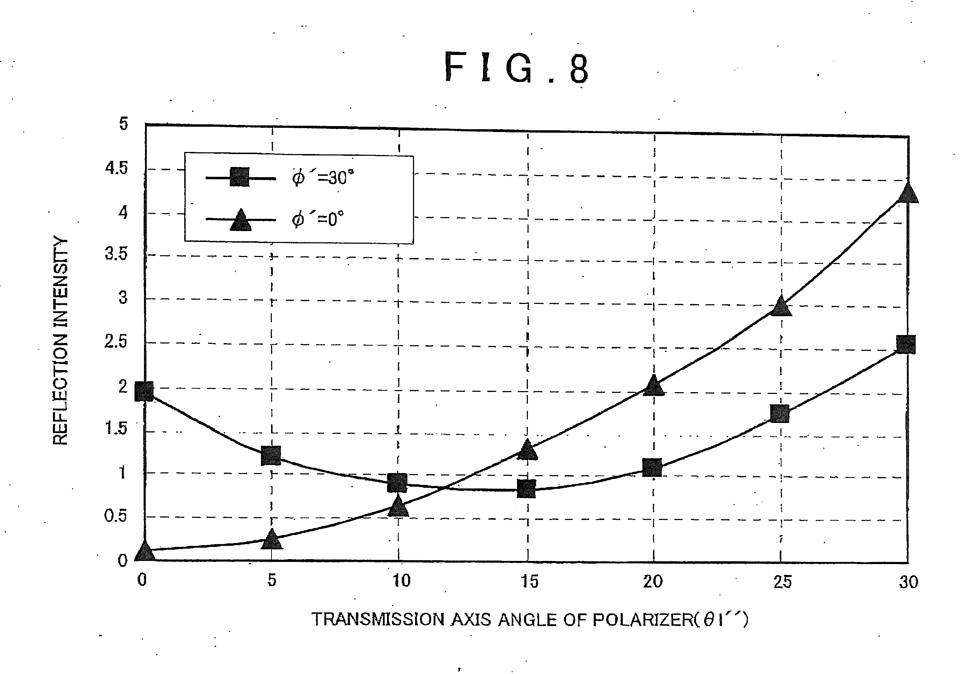

FIG. 8 is a view showing measurement results obtained by measuring a relationship between a transmission axis direction of a second polarizer according to another constitutional example of the invention and a reflection intensity on a windshield;

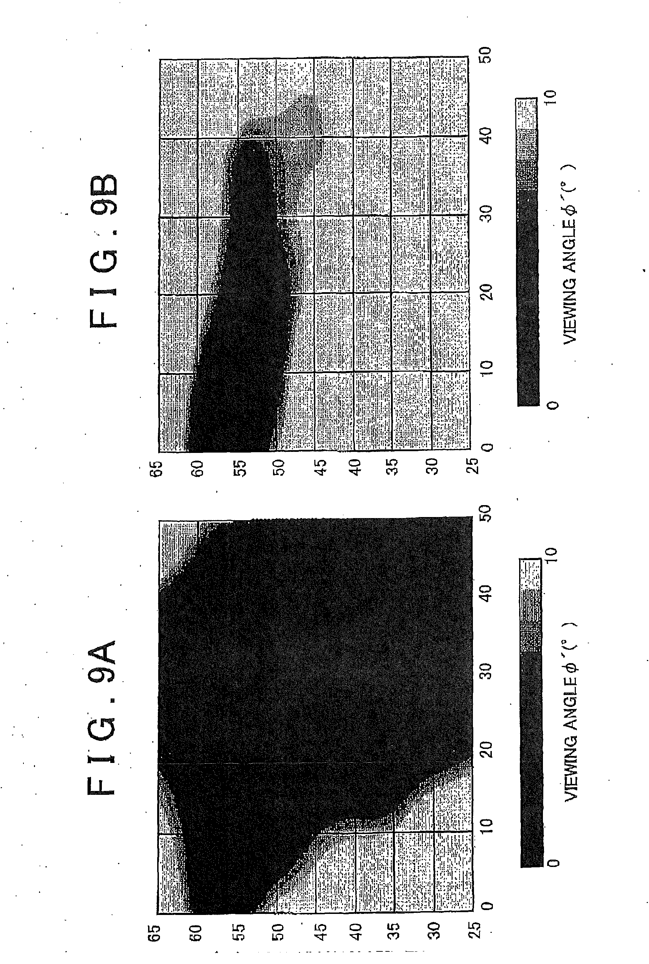

FIG. 9A is a view showing measurement results obtained by measuring the reflection intensity according to a fifth example of the invention;
FIG. 9B is a view showing measurement results obtained by measuring the reflection intensity according to a first comparative example of the invention;

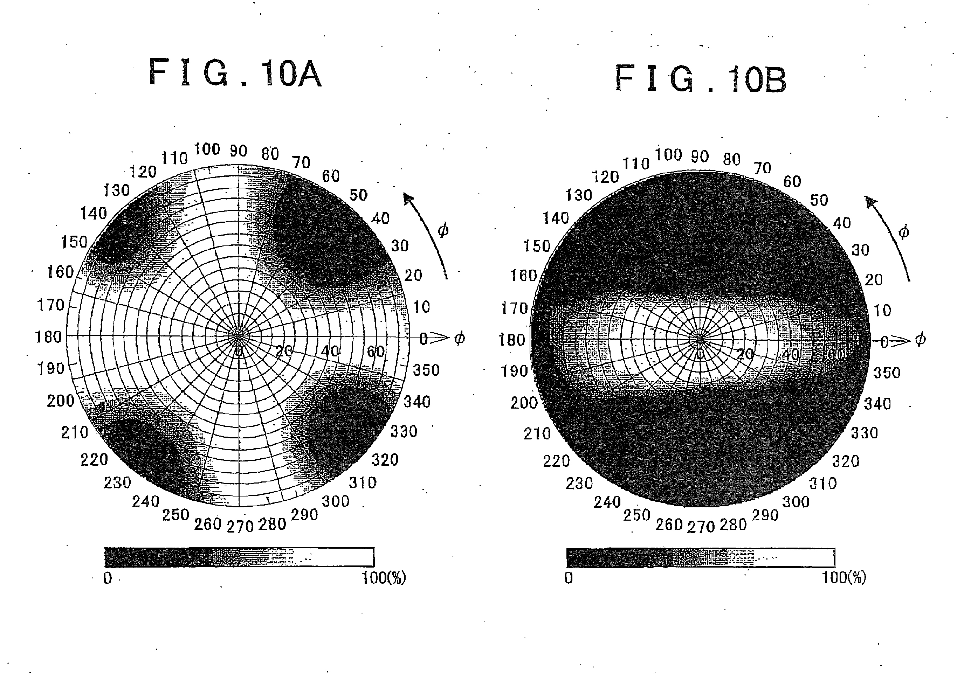

FIG. 10A is a view showing measurement results obtained by measuring a viewing angle dependency of a transmittance of a display front surface according to the fifth example of the invention;
FIG. 10B is a view showing measurement results obtained by measuring the viewing angle dependency of the transmittance of the display front surface according to the first comparative example of the invention;

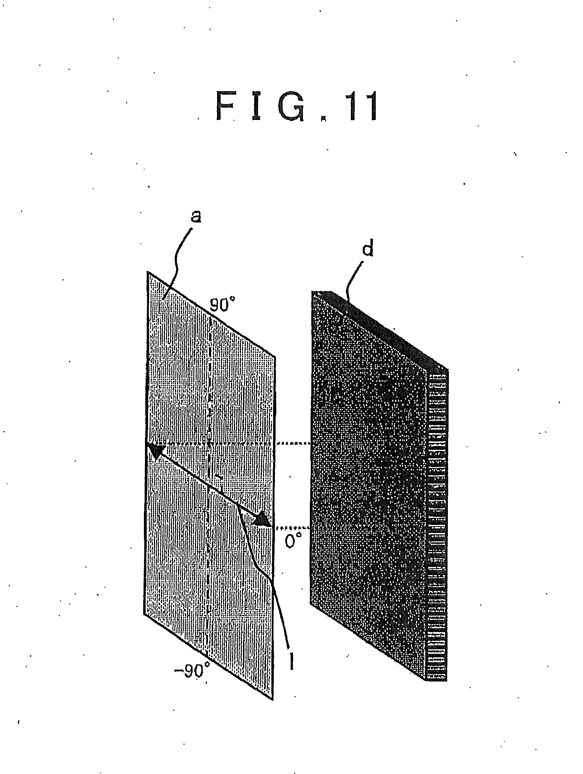

FIG. 11 is a schematic view illustrating a constitution (a second comparative example) employing a louvered structure as the optical control element; and

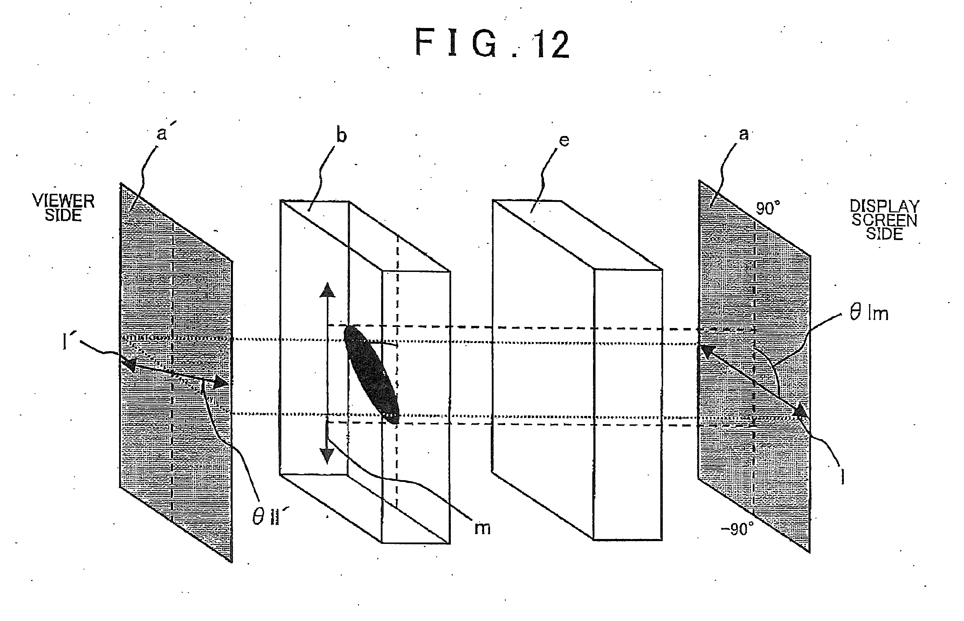

FIG. 12 is a schematic view showing a third constitutional example of the optical control element according to the invention.

### DETAILED DESCRIPTION OF EMBODIMENTS

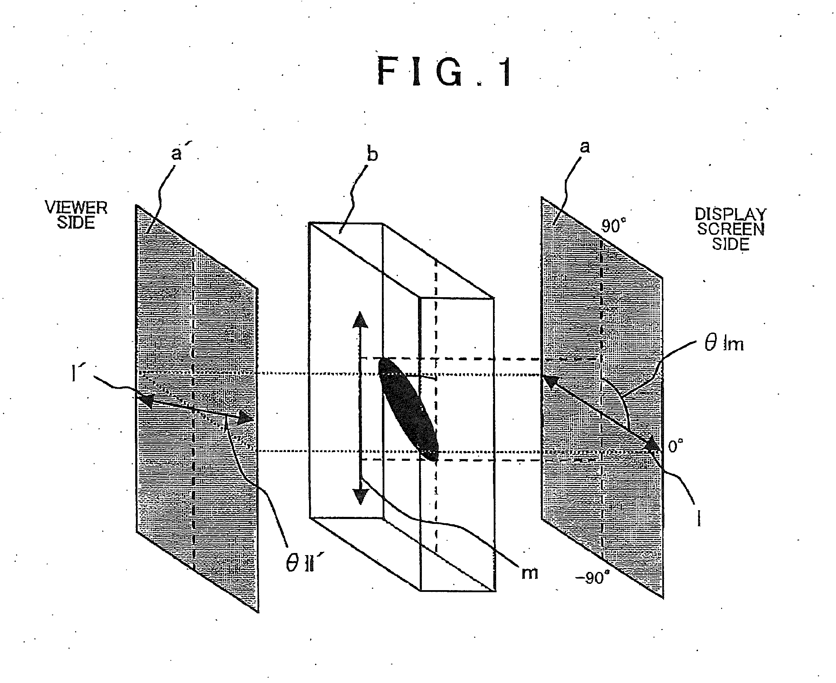

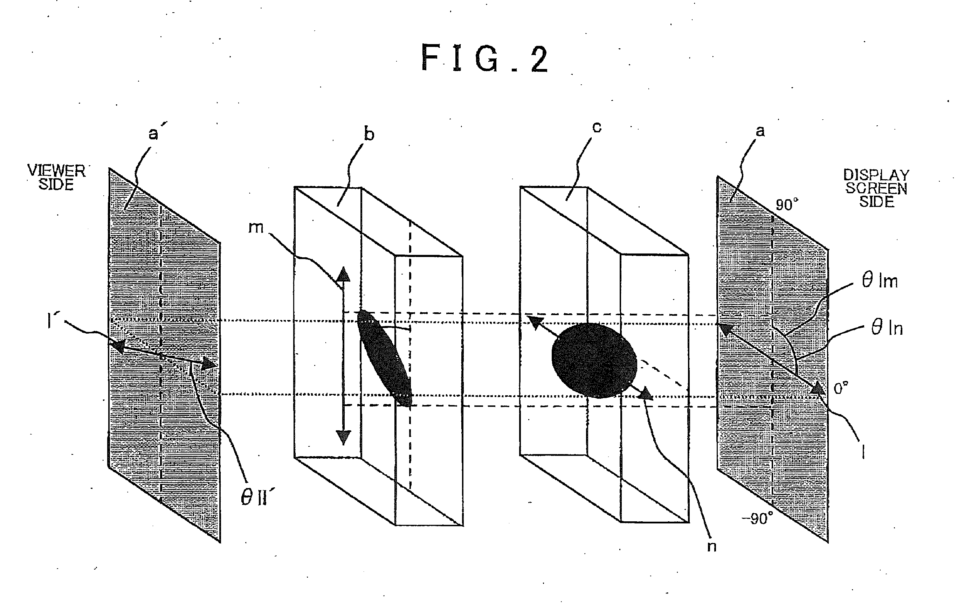

Preferred embodiments of the invention will be described below with reference to the drawings. FIG. 1 is a schematic view showing a first constitutional example of an optical control element according to the invention, and FIG. 2 is a schematic view showing a second constitutional example. Note, however, that the scope of this invention is not limited to the illustrated embodiments.

As shown in FIG. 1, in a first constitutional example 1 of the invention, an inclined retardation film b is sandwiched between a first polarizer a and a second polarizer a', wherein the first polarizer a, the inclined retardation film b, and the second polarizer a' are d-isposed in that order from the display screen side. A polarization absorption axis of the first polarizer a is set in a horizontal direction, while the polarization absorption axis of the second polarizer a' is set in a direction identical to the horizontal direction or a direction having a predetermined angle relative to the horizontal direction. In other words, the optical control element of the invention is used in a display apparatus that employs a VA system or an IPS system as a liquid crystal panel driving system. Further, a retardation angle dependency (retardation value) of the inclined retardation film b is asymmetrical to a normal direction of a film plane when a film in-plane fast axis or slow axis thereof is set as an incline axis.

In the first constitutional example 1, conditions for laminating the polarizers a, a' and the inclined retardation film b depend on the magnitude and degree of asymmetry of the retardation value (to be represented by Re0 hereafter) indicating the film in-plane retardation angle dependency of the used film, and a refractive index of the material of the used film. However, the polarizers a, a' and the inclined retardation film b are preferably laminated such that an angle θ1m formed by an absorption axis 1 of the first polarizer a and an in-plane slow axis m of the inclined retardation film b is 90°. Further, an angle θ11' formed by the absorption axis 1 of the first polarizer a and an absorption angle l' of the second polarizer a' is preferably -40° ≤ θ11' ≤ 40°, and more preferably -30° ≤ θ11' ≤ 30°. When the angles deviate from these ranges, a brightness reduction and a color change may occur in a frontal direction of the display screen, leading to a reduction in visibility.

As shown in FIG. 2, in a second constitutional example 2 of the invention, the inclined retardation film b and a non-inclined retardation film c are sandwiched between the two polarizers a, a', and the first polarizer a, the non-inclined retardation film c, the inclined retardation film b, and the second polarizer a' are disposed in that order from the display screen side. The retardation angle dependency (retardation value) of the non-inclined retardation film c is symmetrical to the normal direction of the film plane when the film in-plane fast axis or slow axis thereof is set as the incline axis.

When the inclined retardation film b and the non-inclined retardation film c are laminated in the second constitutional example 2, a case in which the angle θ1m formed by the in-plane slow axis m of the inclined retardation film b and the absorption axis 1 of the first polarizer a is 90°, (vertical) will be described as a constitutional example 2A; a case in which the angle θ1m is 0° (horizontal) will be described as a constitutional example 2B, and a case in which the angle θ1m is 0 ≤ θ1m <9.0° will be described as a constitutional example 2C.

In the constitutional example 2A, the in-plane slow axis m of the laminated inclined retardation film b is perpendicular to the absorption axis 1 of the first polarizer a, and in the constitutional example 2B, the in-plane slow axis m of the inclined retardation film b is parallel to the absorption axis 1 of the first polarizer a. Hence, in the constitutional examples 2A, 2B, a phase difference does not occur in the film normal direction. Therefore, an absorption axis m of the inclined retardation film b and an absorption axis n of the non-inclined retardation film c may be parallel or perpendicular.
In the constitutional example 2C, on the other hand, the in-plane phase delay axes m and n of the laminated retardation films b, c are neither parallel nor perpendicular to the absorption axis 1 of the first polarizer a. Accordingly, the phase difference must be negated in order to maintain the polarization condition, and therefore the respective absorption axes of the inclined retardation film b and the non-inclined retardation film c are limited to mutually perpendicular directions. In this case, a difference in the Re0 of the inclined retardation film b and the non-inclined retardation c according to the constitutional example 2C is preferably, no greater than 100 nm, and more preferably no greater than 50 nm.

In the constitutional example 2A, the angle θ11' formed by the absorption axis 1 of the first polarizer a and the absorption angle 1' of the second polarizer a' is preferably -40° ≤ θ11' ≤ 40° and more preferably -30° ≤ θ11' ≤ 30°. In the constitutional examples 2B, 2C, meanwhile, the angle θ11' is preferably -50° ≤ θ11' ≤ 50° and more preferably -40° ≤ θ11' ≤ 40°.

When the angle θ1m, the angle θ11', and the retardation value (Re0) difference deviate from the ranges described above, a brightness reduction and a color change may occur in the frontal direction of the display screen, leading to a reduction in visibility.

Optical control effects obtained by blocking light emitted from the display screen in a specific direction will now be described with respect to the first constitutional example 1 and the second constitutional example 2 of the invention using simulations.

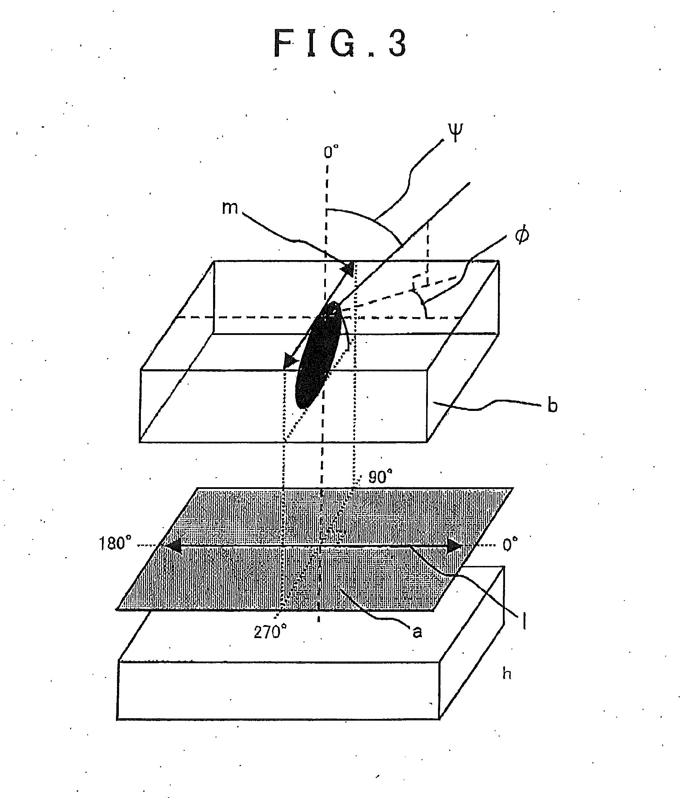

In the first constitutional example 1, as shown in FIG. 3, the absorption axis 1 of the first polarizer a disposed on the display screen side (a liquid crystal cell h) is set in the horizontal direction (= 0°), and the inclined retardation film b having an incline angle of 25° and Re0 = 320 nm is laminated on the first polarizer a such that the angle θ1m formed by the in plane slow axis m thereof and the absorption axis 1 of the first polarizer a is 90°.

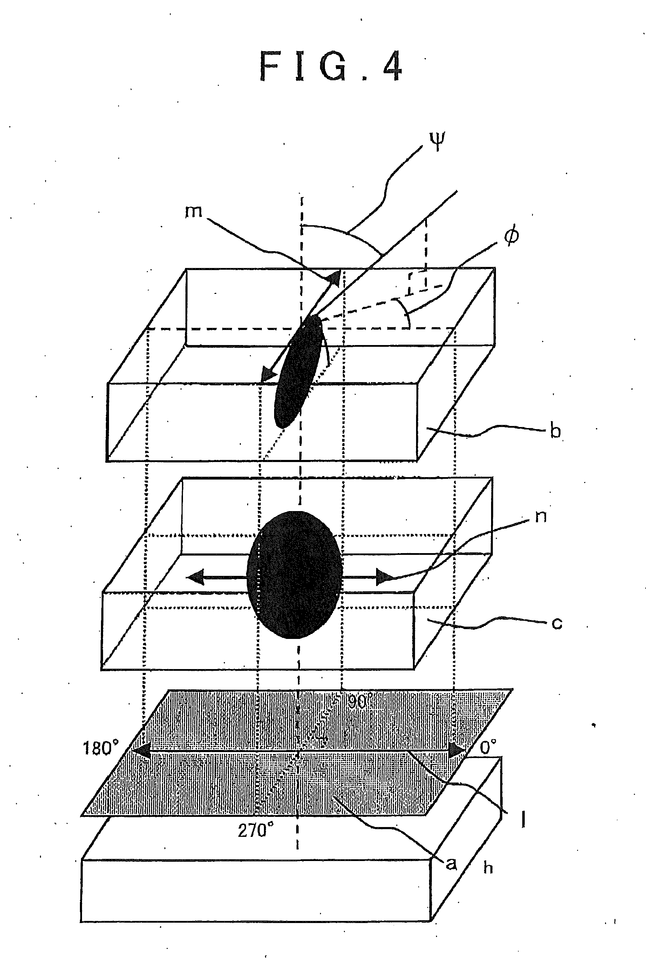

The second constitutional example 2 is shown in FIG. 4. In these cases, a similar characteristic can be obtained when the lamination order of the inclined retardation film b and the non-inclined retardation film c is reversed vertically.

In the constitutional example 2A, the absorption axis 1 of the first polarizer a is set in the horizontal direction (= 0°), the biaxial non-inclined retardation film c having Re0 = 165 nm, Rth = 660 nm is laminated on the first polarizer a such that an angle θ1n formed by the slow axis n thereof and the absorption axis 1 of the first polarizer a is 90°, and the inclined retardation film b having an incline angle of 25° and Re0 = 110 nm is laminated thereon such that the angle θ1m formed by the in-plane slow axis m and the absorption axis 1 of the first polarizer a is 90°.

In the constitutional example 2B, the absorption axis 1 of the first polarizer a is set in the horizontal direction (= 0°), the biaxial non-inclined retardation film c having Re0 = 110 nm, Rth = 440 nm is laminated on the first polarizer a such that the angle θ1n formed by the slow axis n thereof and the absorption axis 1 of the first polarizer a is 90°, and the inclined retardation film b having an incline angle of 25° and Re0 = 155 nm is laminated thereon such that the angle θ1m formed by the in-plane slow axis m and the absorption axis 1 of the first polarizer a is 0°.

In the constitutional example 2C, the absorption axis 1 of the first polarizer a is set in the horizontal direction (= 0°), the biaxial non-inclined retardation film c having Re0 = 110 nm, Rth = 440 nm is laminated on the first polarizer a such that the angle θ1n formed by the slow axis n thereof and the absorption axis 1 of the first polarizer a is 120°, and the inclined retardation film b having an incline angle of 25° and Re0 = 155 nm is laminated thereon such that the angle θ1m formed by the in-plane slow axis m and the absorption axis 1 of the first polarizer a is 30°.

A transmitted light polarization condition in each of these film configuration examples was simulated using a 4x4 matrix method.

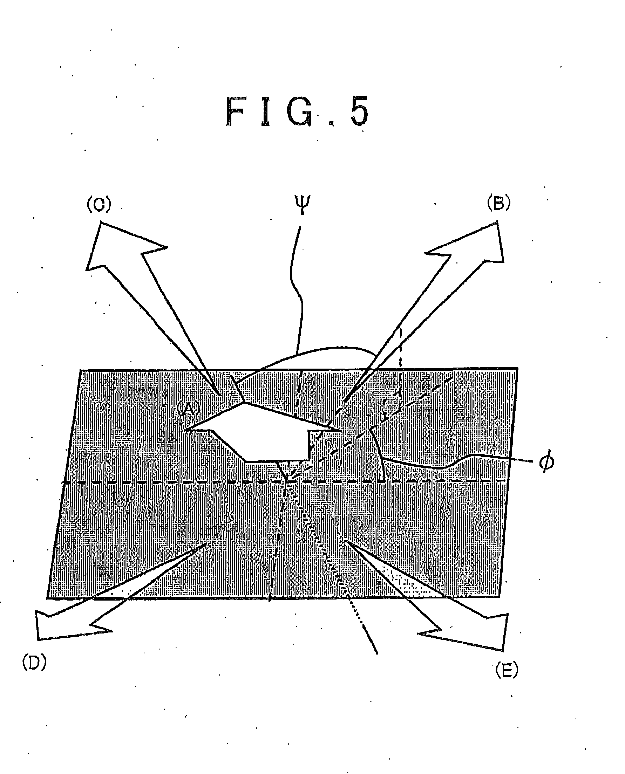

FIG. 5 is a schematic view showing emitted light directions tested during the simulation. The emission directions are represented respectively by (A): [φ = 90°, ϕ = 0°] direction; (B): [φ = 75°, ϕ = 60°] direction; (C): [ϕ = 105°, ϕ = 60°] direction; (D): [ϕ = 255°, ϕ = 60°] direction; and (E): [ϕ = 285°, ϕ = 60°] direction.

Assuming that the display apparatus is installed in a vehicle, the emitted light shown in FIG. 5 is emitted in (A) a normal direction relative to the display screen, (B) a direction in which the light is reflected on a windshield when a viewer positioned on the right side of the display screen views the windshield, (C) a direction in which the light is reflected on the windshield when a viewer positioned on the left side of the display screen views the windshield, (D) a direction heading downward and to the left of the display screen, and (E) a direction heading downward and to the right of the display screen.

FIGS. 6i show simulation results relating to the normal direction . and the light blocking direction of the constitutional example 1 and the constitutional example 2A.
In the film normal direction (A) (FIG. 6iA), a phase difference does not occur, and therefore the emitted light maintains the polarization state of incident light. Each of the emitted light of the direction (B) (FIG. 6iB) and the emitted light of the direction (C) (FIG. 6iC), on the other hand, undergoes a phase difference and therefore rotates greatly from a polarization plane of the incident light. When the second polarizer a' is laminated such that the absorption axis l' thereof is parallel to the absorption axis 1 of the first polarizer a at this time, a high degree of transmittance is maintained in the direction (A), whereas in the directions (B) and (C), each of the majority of the emitted lights can be absorbed by the second polarizer a' and thereby blocked.
Hence, an optical control element capable of blocking emitted light that is reflected on a windshield when a viewer positioned in a left-right direction relative to the display screen views the windshield can be obtained.

FIGS. 6ii show simulation results relating to the normal direction and the light blocking direction in the constitutional example 2B.
In the film normal direction (A) (FIG. 6iiA), a phase difference does not occur, and therefore the emitted light maintains the polarization state of the incident light. Each of the emitted light of the direction (B) (FIG. 6iiB) and the emitted light of the direction (E) (FIG. 6iiE), on the other hand, receives a phase difference and therefore rotates greatly from the polarization plane of the incident light. When the second polarizer a' is laminated such that the absorption axis 1' thereof is parallel to the absorption axis 1 of the first polarizer a at this time, a high degree of transmittance is maintained in the direction (A), whereas in the directions (B) and (E), each of the emitted lights can be blocked.

FIGS. 6iii show simulation results relating to the normal direction and the light blocking direction in the constitutional example 2C.
In the film normal direction (A) (FIG. 6iiiA), the phase difference is negated, and therefore the emitted light maintains the polarization condition of the incident light. The emitted light of the direction (B) (FIG. 6iiB), on the other hand, undergoes a phase difference and therefore rotates greatly from the polarization plane of the incident light. When the second polarizer a' is laminated such that the absorption axis l' thereof is parallel to the absorption axis 1 of the first polarizer a at this time, a high degree of transmittance is maintained in the direction (A), whereas in the direction (B), the emitted light can be blocked.

Hence, with the constitutional examples 2B and 2C, an optical control element capable of blocking emitted light that is reflected on a windshield when a viewer positioned on the right side of the display screen views the windshield can be obtained.

Further, by reversing the film configuration of the constitutional examples 2B and 2C in the left-right direction, emitted light reflected on a windshield when a viewer positioned on the left side of the display screen views the windshield can be blocked.

It can be seen from these simulation results that by sandwiching a film formed by laminating together an inclined retardation film or an inclined retardation film and a non-inclined retardation film between polarizers, an optical control element capable of suppressing transmitted light in a specific direction can be manufactured, and therefore, as will be described in following examples, light emitted in a windshield direction can be blocked.

In another constitutional example of the invention, the effect of suppressing reflection on the windshield, which is obtained by blocking light emitted from the display screen in the windshield direction in accordance with the simulations described above, can be greatly enhanced by limiting a transmission axis 1" direction (θ1" in FIG. 7) of the second polarizer a' on the viewer side to a predetermined angle.
This suppression effect is achieved using the fact that when light is reflected by an interface between media having different refractive indices, a different reflectance is obtained in relation to a P polarization component that is parallel to a plane of incident and an S polarization component that is perpendicular to the plane of incident if the light enters the interface between media at a certain angle, and at a certain angle (Brewster's angle), the reflectance of the P polarization is 0. In other words, considering that the P polarization component P in a parallel plane perpendicular to the windshield and the S polarization component S in a plane perpendicular to the windshield, into which the light emitted from the display is divided, reflection can be suppressed by setting the direction θ1" of the transmission axis 1" of the second polarizer a' such that the polarized light of the emitted light matches the P polarization component P.
Further, with the film configuration proposed by the invention, reflection on the windshield can be reduced without deterioration of the image quality in the display screen normal direction even when the second polarizer a' is disposed at a predetermined angle.

Hence, as shown in FIG. 7, the incline angle of a windshield f relative to a horizontal plane was set at θf= 45° and the display apparatus was disposed at an angle of θd = 65° relative to the horizontal plane. An angle φ' in the horizontal direction is set as an angle of a direction in which a viewer looks at the display apparatus with respect of a line of intersection between the horizontal plane and a plane perpendicular to the display apparatus. An entrance angle θr is set as an angle at which the light emitted from the display apparatus enters into the windshield f with respect to a line perpendicular to the windshield f. A reflection intensity of the emitted light at entrance angle of θr = 55° when the emitted light is viewed at φ' =0° was measured in a case where the angle θ1" of the transmission axis 1" of the second polarizer a' was varied between 0° and 30°. In addition, the reflection intensity of the emitted light when viewed at φ' = 30° was measured in the same case. A positive direction of the angle φ' is set in a counterclockwise direction. The angle directions φ' = 0° and 30° are reflection directions on the windshield f when a viewer positioned in front and to the right of the display screen, respectively, views the windshield f in a typical vehicle.

FIG. 8 shows the degree by which the reflection intensity is dependent on the transmission axis angle (θ1") of the polarizer. When φ' = 0°, reflection reaches a minimum at a transmission axis 1" angle θ1" of 0°. Accordingly, the light emitted from the display screen and input into the windshield forms P polarization when a viewer positioned in front of the display screen views the windshield, and therefore the reflection suppression effect is maximized.
Further, when φ' = 30°, reflection reaches a minimum at a transmission axis 1" angle θ1" of 10 to 15°. Accordingly, the light emitted from the display screen and input into the windshield forms P polarization when a viewer positioned to the right of the display screen views the windshield, and therefore the reflection suppression effect is maximized.
Furthermore, by reversing the angle of the transmission axis 1" of the second polarizer a' in the left-right direction from θ1" = 10° such that θ1" = -10°, reflection on the windshield can be suppressed when a viewer positioned on the left side (φ' = -30°) views the windshield.

The reflection suppression effect of the optical control element proposed by the invention when employed in a display apparatus in which the first polarizer a having a horizontal polarization absorption axis is provided on the display screen side will be described below in a fifth example and a first comparative example.
The optical control effect according to the invention corresponds to both an effect of blocking light emitted from the display screen in a specific direction by sandwiching a retardation film between two polarizers and an effect of suppressing reflection by setting an oscillation direction of polarized light entering the windshield from the display screen such that the polarized light forms P polarization relative to the windshield.

A positional relationship between the display apparatus and a driver will now be described, using as an example a case in which an instrument panel (an instrument panel disposed in a central portion of a driving seat front surface) is disposed in a right-hand drive vehicle.

FIG. 9A shows results obtained by measuring the reflection intensity of reflection on the windshield according to the fifth example, in which the optical control element is mounted on a display apparatus in which the polarizer a having a horizontal polarization absorption axis is provided on the display screen side, and FIG. 9B shows results obtained by measuring the reflection intensity of reflection on the windshield in a display apparatus according to the first comparative example, which does not include an optical control element.

As shown in FIG. 7, the reflection intensity of light reflected at an entrance angle of θr = 25° to 65° when viewed at φ' = 0° to 50° was measured in a case where a glass plate representing the windshield was disposed at an angle of θr = 45° relative to a horizontal plane and the display apparatus was disposed at an angle of θd = 65° relative to the horizontal plane.

In FIG. 9A, it is possible to suppress reflection in a driver direction (around φ' = 30°) in the vicinity of Brewster's angle (θr = 55°) by setting the angle θ11' of the absorption axis 1' of the second polarizer a' at 10°. In FIG. 9B, on the other hand, the transmission axis of the first polarizer a is set in a perpendicular direction, and therefore reflection occurs in the driver direction.
Further, in FIG. 9A, reflection can be suppressed greatly in a wide reflection angle θr range of the driver direction by blocking the light emitted from the display screen using a phase difference, as described in the above simulations.
It can be seen from these results that with the optical control element according to the constitutional examples of the invention, reflection on the windshield in the driver direction of the display screen can be greatly suppressed.

Further, with the optical control element according to the constitutional examples of the invention, the angle dependency of the transmittance is small, and therefore a wide viewing angle characteristic (viewing region) can be maintained on the display screen. Hence, the problem of the related art (the louvered structure), according to which the transmittance exhibits great angle dependency such that the display apparatus has a narrow viewing angle characteristic, can be solved.
FIGS. 10A and 10B respectively show viewing angle characteristics of the display screen when the optical control element according to the constitutional examples of the invention (the fifth example) and an optical control element having a louvered structure (a second comparative example) are disposed.
Here, the optical intensity was measured in a range of viewing angle φ = 0 to 75°, azimuth φ = 0 to 360° in a plane normal to the display screen. The transmittance is expressed as
Transmittance = (emitted light intensity / emitted light intensity when optical control element of invention not provided (first comparative example)) × 100..

With the optical control element according to the invention, as shown in FIG, 10A, a high degree of transmittance can be maintained in a wide range from the center, and a light blocking characteristic is exhibited on the periphery of a φ = 45° direction, i.e. the driver direction.
In FIG. 10B; where light is blocked using a conventional louvered structure, on the other hand, frontal transmittance is low and the light blocking characteristic is sharp. As a result, visibility from a vertical direction is poor.

It can be seen from these results that by employing the optical control element according to the invention, reflection on a windshield can be suppressed without impairing the visibility of the display screen.

Note that for convenience, FIG. 7 shows a right-hand drive vehicle, but by performing lamination such that the transmission axis 1" direction of the second polarizer a', the slow axis (or fast axis) directions m, n, Re0 of the retardation films, and so on are optimized, an optical control element that suppresses reflection in accordance with the viewing angle, for example in a frontal direction, a left side direction, or the like relative to the display screen, can be manufactured.

FIG. 12 is a schematic view showing a third constitutional example of the optical control element according to the invention. In the third constitutional example 3, a transparent touch panel electrode substrate e and the inclined retardation film b are sandwiched between the two polarizers a, a', and the first polarizer a, the transparent touch panel electrode substrate e, the inclined retardation film b, and the second polarizer a' are disposed in that order from the display screen side. The first polarizer a, second polarizer a', and inclined retardation film b are formed similarly to those of the first constitutional example 1. Note that a constitution in which the transparent touch panel electrode substrate e, the non-inclined retardation film c, and the inclined retardation film b are sandwiched between the two polarizers a, a' may be employed. In this case, the first polarizer a, second polarizer a', inclined, retardation film b, and non-inclined retardation film c are formed similarly to those of the second constitutional example 2.

Examples of the invention will now be described.
In first and second examples, reflection on the windshield is suppressed in a case where a viewer positioned in front of the display screen views the windshield (φ' = 0° in FIG. 7).

The film configuration of the optical control element according to the first example will now be described using FIG. 1. The film configuration is as described in the first constitutional example 1, and the absorption axis 1' direction of the second polarizer a' is set at θ11' = 0°.

In a display apparatus in which the first polarizer a having a horizontal polarization absorption axis is provided on the display screen side, the inclined retardation film b (incline angle = 23.5°, Re0 = 300 nm, base material = 80 µm TAC film) manufactured using a photo-alignment material described in Japanese Patent Application Publication No. 2002-202409 (JP-A-20'02-202409) and Japanese Patent Application Publication No. 2004-170595 (JP-A-2004-170595) was disposed such that the angle θ1m of the in-plane slow axis of the inclined retardation film was 90° relative to the absorption axis 1 of the first polarizer a. Next, the second polarizer a' was disposed such that the angle θ11' formed by the absorption axis 1 of the first polarizer a and the absorption axis 1' of the second polarizer a' was 0°. The first and second polarizers a, a' were adhered to the inclined retardation film b using an adhesive. As shown in FIG. 7, to test reflection on a windshield when the optical control element of the invention was installed in a vehicle, a reflection intensity ratio of light reflected on the windshield between φ' = 0 and 15° was measured in a case where the display apparatus was disposed at an angle of θd = 65° relative to the horizontal plane, the windshield was disposed at an angle of θf = 45° relative to the horizontal plane, and the entrance angle θr of the light at a viewing angle φ' of 0° was 55°. The results are shown in Table 1.
Here, the reflection intensity ratio is expressed as
Reflection intensity ratio = reflection intensity / reflection intensity at φ' = 0° when optical control element of invention not provided (first comparative example).
Further, frontal transmittance in the normal direction (φ' = 0°) of the display screen was measured at this time, and the results are shown in Table 2.
Here, the transmittance is expressed as
Transmittance = (emitted light intensity / emitted light intensity when optical control element of invention not provided (first comparative example)) × 100.

The film configuration of the optical control element according to the second example will now be described using FIG. 2. The film configuration is as described in the constitutional example 2A, and the absorption axis 1' direction of the second polarizer a' is set at θ11' = 0°.

In a display apparatus in which the first polarizer a having a horizontal polarization absorption axis is provided on the display screen side, the inclined retardation film b (incline angle = 23.5°, Re0 =100 nm, base material = 80 µm TAC film) and the non-inclined retardation film c (Re = 165 nm, Rth = 660 nm) were disposed such that the angles θ1m, θ1n of the respective in-plane phase delay axes thereof were 90° relative to the absorption axis 1 of the first polarizer a. Next, the first polarizer a and the second polarizer a' were disposed such that the angle θ11' formed by the respective absorption axes 1, 1' thereof was 0°. The first and second polarizers a, a', the inclined retardation film b, and the non-inclined retardation film c were adhered using an adhesive.
Further, the reflection intensity ratio and the frontal transmittance when the optical control element was installed in a vehicle were measured in a similar manner to the first example, and the results are shown respectively in Table 1 and Table 2.

In third to sixth examples described below, reflection on the windshield is suppressed in a case were a viewer positioned to the right of the display screen views the windshield (φ' = 30° in FIG. 7).

The film configuration of the optical control element according to the third example will now be described using FIG. 1. The film configuration is as describe in the first constitutional example 1, and the absorption axis 1' direction of the second polarizer a' is set at θ11' =10°.

In a display apparatus in which the first polarizer a having a horizontal polarization absorption axis is provided on the display screen side, the inclined retardation film b (incline angle = 23.5°, Re0 = 300 nm, base material = 80 µm TAC film) was disposed such that the angle θ1m of the in-plane slow axis of the inclined retardation film b was 90° relative to the absorption axis 1 of the first polarizer a. Next, the first polarizer a and the second polarizer a' were disposed such that the angle θ11' formed by the respective absorption axes 1, 1' thereof was 10°. The first and second polarizers a, a' were adhered to the inclined retardation film b using an adhesive.
Reflection when the optical control element was installed in a vehicle was measured in a similar manner to the first example to determine the reflection intensity ratio in a φ' = 30° direction.
Here, the reflection intensity ratio is expressed as
Reflection intensity ratio = reflection intensity / reflection intensity at φ' = 30° when optical control element of invention not provided (first comparative example).
Further, the reflection intensity-ratio and the frontal transmittance when the optical control element was installed in a vehicle were measured in a similar manner to the first example, and the results are shown in Table 2.

The film configuration of the optical control element according to the fourth example will now be described using FIG. 2. The film configuration is as described in the constitutional example 2A, and the absorption axis 1' direction of the second polarizer a' is set at θ11' = 10°.

In a display apparatus in which the first polarizer a having a horizontal polarization absorption axis is provided on the display screen side, the inclined retardation film b (incline angle = 23.5°, Re0 = 100. nm, base material = 80 µm TAC film) and the non-inclined retardation film c (Re = 165 nm, Rth = 660 nm) were disposed such that the angles θlm, θln of the respective in-plane phase delay axes thereof were 90° relative to the absorption axis 1 of the first polarizer a. Next, the first polarizer a and the second polarizer a' were disposed such that the angle θ11' formed by the respective absorption axes 1, 1' thereof was 10°. The first and second polarizers a, a', the inclined retardation film b, and the non-inclined retardation film c were adhered using an adhesive.
Further, the windshield reflection and frontal transmittance characteristics when the optical control element was installed in a vehicle were tested in a similar manner to the third example.

The film configuration of the optical control element according to the fifth example will now be described using FIG. 2. The film configuration is as described in the constitutional example 2B, and the absorption axis 1' direction of the second polarizer a' is set at θ11' = 10°.

In a display apparatus in which the first polarizer a having a horizontal polarization absorption axis is provided on the display screen side, the inclined retardation film (incline angle = 23.5°, Re0 = 100 nm, base material = 80 µm TAC film) and the non-inclined retardation film (Re = 165 nm, Rth= 660 nm) were disposed such that the angle θ1m of the in-plane slow axis of the inclined retardation film b was 0° and the angle θ1n of the in-plane slow axis of the non-inclined retardation film c was 90° relative to the absorption axis 1 of the first polarizer a. Next, the first polarizer a and the second polarizer a' were disposed such that the angle θ11' formed by the respective absorption axes 1, 1' thereof was 10°. The first and second polarizers a, a', the inclined retardation film b, and the non-inclined retardation film c were adhered using an adhesive.
The windshield reflection and frontal transmittance characteristics when the optical control element was installed, in a vehicle were tested in a similar manner to the third example.

The film configuration of the optical control element according to the sixth example will now be described using FIG. 2. The film configuration is as described in the constitutional example 2C, and the absorption axis 1' direction of the second polarizer a' is set at θ11' = 10°.

In a display apparatus in which the first polarizer a having a horizontal polarization absorption axis is provided on the display screen side, the inclined retardation film b (incline angle = 23.5°, Re0 = 100 nm, base material = 80 µm TAC film) and the non-inclined retardation film c (Re = 110 nm, Rth = 440 nm) were disposed such that the angle θ1m of the in-plane slow axis of the inclined retardation film b was 30° and the angle θ1n of the slow axis of the non-inclined retardation film c was 120° relative to the absorption axis 1 of the first polarizer a. Next, the first polarizer a and the second polarizer a' were disposed such that the angle θ11' formed by the respective absorption axes 1, 1' thereof was 10°. The first and second polarizers a, a', the inclined retardation film b, and the non-inclined retardation film c were adhered using an adhesive. The windshield reflection and frontal transmittance characteristics when the optical control element was installed in a vehicle were tested in a similar manner to the third example.

The film configuration-according to the first comparative example will now be described.
Using a display apparatus not having an optical control element in which a polarizer having a horizontal polarization absorption axis is provided on the display screen side, the refection intensity and the viewing angle dependency of the brightness characteristic were measured in a similar manner to the examples, using the characteristic evaluations of the first to sixth examples and the second comparative example as a reference,

The film configuration according to the second comparative example will now be described with reference to FIG. 11.
Using a display apparatus in which a polarizer having a horizontal polarization absorption axis is provided on the display screen side, a louvered film "LAF" (manufactured by Dai Nippon Printing Company Ltd.) d was disposed on a light entrance side of the first polarizer a such that a light blocking direction thereof was set in a vertical direction.
The windshield reflection and frontal transmittance characteristics when the optical control element was installed in a vehicle were then tested in a similar manner to the examples.

Table 1 shows the viewing angle dependency of the reflection intensity in relation to the first and second examples of the invention. In the first and second examples, as shown in FIGS. 6iB and 6iC, a reflection suppression effect was secured over a wide range when the windshield was viewed from a left-right viewing angle φ' direction by blocking light emitted from the display screen so that the light was not reflected on the windshield when viewed from the left-right direction.

**TABLE 1**

| REFLECTION INTENSITY RATIO | | | | | | | |
|---|---|---|---|---|---|---|---|
| | φ = -15° | φ = -10° | φ' = -5° | φ' = 0° | φ' = 5° | φ' = 10° | φ' = 15° |
| FIRST EXAMPLE | 2.77 | 1.77 | 1.27 | 0.91 | 1.27 | 1.77 | -2.77 |
| SECOND EXAMPLE | 1.23 | 1.32 | 0.86 | 0.82 | 0.86 | 1.32 | 1.23 |
| THIRD EXAMPLE | 4.41 | 2.55 | 1.45 | 1.00 | 1.45 | 2.55 | 4.41 |

Further, in the third to sixth example of the invention, the reflection intensity at φ' = 30° was suppressed to an extremely large degree so as to be 0.22 in the third example, 0.16 in the fourth example, 0.098 in the fifth example, and 0.081 in the sixth example. This large reflection suppression effect was obtained by simultaneously blocking light emitted from the display screen using the retardation film and using the P polarization generated by the second polarizer.

A right-hand drive vehicle was envisaged in the third to sixth examples, but by reversing the film configuration in the left-right direction, the third to sixth examples can be applied to a left-hand drive vehicle.

Table 2 shows the frontal transmittance in the examples and comparative examples of the invention. In the first to sixth examples of the invention, the frontal transmittance is high, and therefore, as shown in FIG. 10A, transmittance is maintained over a wide range. Hence, favorable visibility with little color change is obtained.
In the optical control element employing the conventional louvered film (the second comparative example), on the other hand, although a favorable reflection suppression effect is obtained, the frontal transmittance is low and transmittance variation in the vertical direction is sharp, as shown in FIG. 10B. Therefore, a narrow viewing angle characteristic (transmittance = 10.4% in φ = 60°, φ = 30° directions) is obtained.

**TABLE 2**

| | FRONTAL TRANSMITTANCE (%) |
|---|---|
| FIRST EXAMPLE | 86.5 |
| SECOND EXAMPLE | 90.5 |
| THIRD EXAMPLE | 87.1 |
| FOURTH EXAMPLE | 90.7 |
| FIFTH EXAMPLE | 90.7 |
| SIXTH EXAMPLE | 90.3 |
| FIRST COMPARATIVE EXAMPLE | 100 |
| SECOND COMPARATIVE EXAMPLE | 74.8 |

The optical control element according to the constitutional examples of the invention suppresses reflection on a windshield of diffused light that is emitted in a specific direction from a display screen of a display apparatus installed in a vehicle. Therefore, the display apparatus can be used in various types of vehicles (road vehicles such as automobiles, motorcycles, buses, and trucks, or railroad vehicles).

Preferred embodiments of the invention were described above with reference to the drawings. However, various additions, modifications, and deletions may be made to the embodiments within a scope that does not depart from the spirit of the invention, and these additions, modifications, and deletions are included in the scope of the invention.

## Claims

1. An optical control element **characterized by** comprising:
a first polarizer (a) that is provided on a display screen side of a display apparatus and has a polarization absorption axis (1) set in a horizontal direction;
a second polarizer (a') that is provided on a viewer side of the display apparatus and has a polarization absorption axis (1') set in the horizontal direction or a direction that forms a predetermined angle with the horizontal direction; and
at least one retardation film (b) disposed between the first polarizer and the second polarizer.

2. The optical control element according to claim 1 further comprising
a transparent touch panel electrode substrate (e) disposed between the first polarizer and the second polarizer.

3. An optical control element **characterized by** comprising:
a first polarizer (a) that is provided on a display screen side of a display apparatus including a touch panel and has a polarization absorption axis (1) set in a horizontal direction;
a second polarizer (a') that is provided on a viewer side of the display apparatus and has a polarization absorption axis (1') set in the horizontal direction or at a direction that forms a predetermined angle with the horizontal direction; and
a transparent touch panel electrode substrate (e) and at least one retardation film (b) disposed between the first polarizer and the second polarizer.

4. The optical control element according to any one of claims 1 to 3, wherein the retardation film is an inclined retardation film (b) in which a retardation angle dependency is asymmetrical to a normal direction of a film plane when a film in-plane fast axis or slow axis thereof is set as an incline axis.

5. The optical control element according to any one of claims 1 to 4, wherein the retardation film is a laminated retardation film formed by laminating together two or more retardation films.

6. The optical control element according to claim 5, wherein the laminated retardation film is a laminated retardation film formed by laminating together the inclined retardation film (b) and a non-inclined retardation film (c) in which the retardation angle dependency is symmetrical to the normal direction of the film plane when the film in-plane fast axis or slow axis thereof is set as the incline axis.

7. The optical control element according to claim 5 or 6, wherein the phase advance axes or phase delay axes of the inclined retardation film (b) and the non-inclined retardation film (c) are parallel or orthogonal.

8. The optical control element according to any one of claims 5 to 7, wherein the non-inclined retardation film (c) of the laminated retardation film is biaxial.

9. The optical control element according to any one of claims 1 to 8, wherein the optical control element is used in an in-vehicle display apparatus, and
the second polarizer (a') is configured such that a polarized light emitted from the second polarizer (a') forms a P polarization component relative two a reflective windshield.

10. The optical control element according to any one of claims 1 to 9, wherein an angle θ11' or θ1" formed by respective absorption axes or transmission axes of the first polarizer (a) on the display screen side and the second polarizer (a') on the viewer side is set within a range of -50° ≤ θ11'≤ 50° or -50° ≤ θ1" ≤ 50°.
